# EUROPEAN PATENT APPLICATION

(11) **EP 4 647 406 A1**
(43) Date of publication of application: **12.11.2025**
(21) Application number: 24791701.6
(22) Date of filing: 30.01.2024
(51) Int. Cl.: C03C 3/097, C03C 10/00

(54) **BASIC GLASS, MICROCRYSTALLINE GLASS AND PREPARATION METHOD THEREFOR, GLASS PRODUCT AND TERMINAL DEVICE**

(30) Priority: 19.04.2023 CN 202310446898
(71) Applicant: Huawei Technologies Co., Ltd., Shenzhen, Guangdong 518129 (CN); Wuhan University Of Technology, Wuhan, Hubei 430070 (CN)
(72) Inventor: ZHENG, Weihong, Wuhan, Hubei 430070 (CN); ZENG, Zhou, Shenzhen, Guangdong 518129 (CN); HUANG, Yihong, Shenzhen, Guangdong 518129 (CN); DU, Ying, Shenzhen, Guangdong 518129 (CN); JIANG, WenJie, Shenzhen, Guangdong 518129 (CN); YUAN, Jian, Wuhan, Hubei 430070 (CN); TIAN, Peijing, Wuhan, Hubei 430070 (CN); ZHANG, Hao, Wuhan, Hubei 430070 (CN); WANG, Qidong, Wuhan, Hubei 430070 (CN)
(74) Representative: Körber, Martin Hans
(86) International application number: PCT/CN2024/074757
(87) International publication number: WO 2024/217113

(57) **Abstract**

Embodiments of this application provide base glass. The base glass includes the following components in molar percentages: Y₂O₃: 4% to 15%; Al₂O₃: 3% to 30%; SiO₂: 40% to 75%; ZrO₂: 0.5% to 4%; Li₂O: 3% to 12%; Na₂O: 1.5% to 9%; P₂O₅: 0.1% to 2%; and ZnO: 1% to 8%. The base glass is capable of being subject to heat treatment for crystallization, and/or chemical ion strengthening treatment. Embodiments of this application further provide microcrystalline glass and a preparation method therefor, a glass product, and a terminal device. The base glass of an yttrium-aluminum-silicon system provided in this application can be subject to heat treatment for microcrystallization to obtain microcrystalline glass, and the microcrystalline glass can be further subject to chemical strengthening treatment. In this way, the obtained microcrystalline glass has both high mechanical properties and high optical properties.

## Description

### CROSS-REFERENCE TO RELATED APPLICATIONS

This application claims priority to Chinese Patent Application No. 202310446898.4, filed with the China National Intellectual Property Administration on April 19, 2023 and entitled "BASE GLASS, MICROCRYSTALLINE GLASS AND PREPARATION METHOD THEREFOR, GLASS PRODUCT, AND TERMINAL DEVICE", which is incorporated herein by reference in its entirety.

### TECHNICAL FIELD

This application relates to the field of glass technologies, and in particular, to base glass, microcrystalline glass and a preparation method therefor, a glass product, and a terminal device using the glass product.

### BACKGROUND

With the development of communication and electronic technologies, a light weight, thinning, a large size, and high performance have become a mainstream trend for the development of mobile terminals. Therefore, the selection of transparent microcrystalline glass with more outstanding properties is necessary for the development of mobile terminal industry.

At present, the research on microcrystalline glass of a lithium-aluminum-silicon system is mature. Although the microcrystalline glass of such a system has good optical properties, the composition of the microcrystalline glass includes a high content of lithium oxide, resulting in high costs. In addition, the microcrystalline glass of the lithium-aluminum-silicon system has low modulus of elasticity and low surface hardness. Due to the low modulus of elasticity, the glass is likely to break when subject to a dropping test (that is, subject to a specific mechanical impact). Due to the low surface hardness, the glass is not resistant to scratching and is likely to have scratches, and the glass is likely to crack when a sharp object impacts on the glass.

### SUMMARY

In view of this, to resolve at least one of the foregoing disadvantages, embodiments of this application provide base glass of an yttrium-aluminum-silicon system. The base glass is capable of being subject to heat treatment for crystallization, and/or chemical ion strengthening treatment. Microcrystalline glass obtained from the base glass has both high mechanical properties and high optical properties.

In addition, embodiments of this application further provide microcrystalline glass obtained from the base glass, a method for preparing the microcrystalline glass, a glass product, and a terminal device using the glass product.

A first aspect of embodiments of this application provides base glass. The base glass includes the following components in molar percentages: yttrium(III) oxide (Y₂O₃): 4% to 15%;
aluminum(III) oxide (Al₂O₃): 3% to 30%;
silicon dioxide (SiO₂): 40% to 75%;
zirconium dioxide (ZrO₂): 0.5% to 4%;
lithium oxide (Li₂O): 3% to 12%;
sodium oxide (Na₂O): 1.5% to 9%;
phosphorus pentoxide (P₂O₅): 0.1% to 2%; and
zinc oxide (ZnO): 1% to 8%, where
the base glass is capable of being subject to heat treatment for crystallization, and/or chemical ion strengthening treatment.

A new type of base glass of an yttrium-aluminum-silicon system can be prepared by limiting a specific component of the yttrium-aluminum-silicon base glass and a content of each component. A mixed batch for the composition of the base glass can be melted at a low temperature. In addition, a crystalline phase with a specific crystal form and size can be precipitated in the base glass through an optimized heat treatment process, to form microcrystalline glass. Moreover, the obtained microcrystalline glass can be further subject to chemical ion exchange strengthening treatment. In this way, the microcrystalline glass of the yttrium-aluminum-silicon system that has high mechanical properties, high transparency, and low costs, and that can be produced on a large scale is formed. It may be understood that the base glass may be directly subject to chemical ion strengthening treatment to obtain strengthened glass, to meet different use requirements.

With reference to the first aspect, in some possible embodiments, the components of the base glass have at least one of the following proportion relationships:
a ratio of a molar percentage of Al₂O₃ to a molar percentage of Y₂O₃ is 0.2 to 7.5;
a sum of a molar percentage of Y₂O₃ and a molar percentage of Al₂O₃ is 7% to 45%;
a ratio of a molar percentage of Y₂O₃ to a molar percentage of Li₂O is 0.33 to 8; and
a ratio of a molar percentage of Li₂O to a molar percentage of Na₂O is 0.33 to 8.

Transparent yttrium-aluminum-silicon glass can be prepared by limiting at least one of the foregoing proportion relationships of the components, avoiding phase separation or loss of transparency of the glass. In this case, through controllable crystallization, a crystalline phase of a desired type can be formed, and sizes and distribution of crystals can be adjusted and controlled, and excellent ion exchange effect can be achieved, thereby obtaining microcrystalline glass with high strength, high transparency, and low costs.

With reference to the first aspect, in some possible embodiments, the base glass further includes 0% to 2% of titanium dioxide (TiO₂) in a molar percentage.

Titanium dioxide may be introduced as a nucleation agent and combined with ZrO₂ and P₂O₅ to form a composite nucleation agent. Titanium dioxide can increase a nucleation rate for microcrystalline glass. However, the microcrystalline glass can be colored with an excessively large amount of introduced titanium dioxide. Therefore, an addition amount of titanium dioxide is controlled to be within a range of 0% to 2%.

Further, a total molar percentage of ZrO₂, TiO₂, and P₂O₅ is 2% to 6%.

Transparent yttrium-aluminum-silicon glass can be prepared by controlling the total amount of the composite nucleation agent, making crystallization controllable, so that a crystalline phase of a desired type can be formed, and sizes and distribution of crystals can be adjusted and controlled.

Further, a ratio of the molar percentage of Y₂O₃ to the total molar percentage of ZrO₂+TiO₂+P₂O₅ is 0.5 to 25.

Precipitation of an yttrium-containing crystalline phase can be more controllable by controlling the ratio of the amount of Y₂O₃ to the total amount of the composite nucleation agent, so that a main crystalline phase of a desired type can be formed, and sizes and distribution of crystals can be adjusted and controlled.

With reference to the first aspect, in some possible embodiments, the base glass further includes the following components in molar percentages:
magnesium oxide (MgO): 0% to 2%;
cerium oxide (CeO₂): 0.1% to 0.5%; and
antimony(III) oxide (Sb₂O₃): 0.1% to 0.5%.

Introduction of MgO helps improve melting and formation of the glass. However, an excessively large amount of introduced MgO is likely to cause phase separation of the glass and is not conducive to ion exchange. CeO₂ and Sb₂O₃ are introduced as a composite clarifying agent.

A second aspect of embodiments of this application provides microcrystalline glass. The microcrystalline glass is obtained through heat treatment for crystallization on the base glass according to the first aspect of embodiments of this application, and a main crystalline phase of the microcrystalline glass includes one or a composite crystalline phase of Y_{y}ZrₓO_{1.5y+2x}, ZrₓY_{y}O_{2x+1.5y}, and ZrO₂. Further, the main crystalline phase of the microcrystalline glass includes one or a composite crystalline phase of Y_{y}ZrₓO_{1.5y+2x} and ZrₓY_{y}O_{2x+1.5y}.

The main crystalline phase of the foregoing types helps increase hardness, modulus of elasticity, and fracture toughness of the microcrystalline glass, thereby improving scratching resistance and impact resistance of the microcrystalline glass. Specifically, Young's modulus of the microcrystalline glass is greater than or equal to 90 GPa; microhardness of the microcrystalline glass is greater than or equal to 700 Hv at 0.2 Kgf; and transmittance of the microcrystalline glass at 550 nm in a visible light region is greater than or equal to 88%.

It may be understood that, in addition to the foregoing main crystalline phase, the crystalline phase of the microcrystalline glass may further include another crystalline phase, for example, one or a composite crystalline phase of ZnAl₂O₄, spodumene, a quartz solid solution, and the like.

With reference to the second aspect, in some possible embodiments, crystallinity of the main crystalline phase is greater than or equal to 5% and less than or equal to 90%, and an average crystal size of the main crystalline phase is less than or equal to 100 nm.

The crystallinity of the main crystalline phase affects hardness, modulus of elasticity, fracture toughness, and transmittance of the microcrystalline glass. As the crystallinity increases, the hardness, modulus of elasticity, and fracture toughness of the microcrystalline glass increase correspondingly, but the transmittance decreases, and consequently the microcrystalline glass can be hardly used in a mobile terminal. As the crystallinity decreases, the transmittance of the microcrystalline glass increases, but the hardness, modulus of elasticity, and fracture toughness are excessively low, and consequently the microcrystalline glass can also be hardly used in a mobile terminal. Therefore, in embodiments of this application, during heat treatment, the crystallinity of the main crystalline phase is controlled to be greater than or equal to 5% and less than or equal to 90%.

The average crystal size and distribution uniformity of the main crystalline phase affect mechanical properties and optical properties of the obtained microcrystalline glass. An excessively large average crystal size leads to poor optical properties, for example, low transmittance. An excessively small average crystal size leads to reduced mechanical properties, for example, poor strength and impact resistance. Therefore, in embodiments of this application, during heat treatment, the average crystal size of the main crystalline phase is controlled to be less than or equal to 100 nm.

With reference to the second aspect, in some possible embodiments, the microcrystalline glass is capable of being subject to chemical ion strengthening treatment.

Through optimization of the composition of the base glass and optimization of the heat treatment process, the obtained microcrystalline glass can be subject to chemical strengthening treatment, to further increase strength of the microcrystalline glass while ensuring that there is no loss of optical properties.

Specifically, after the microcrystalline glass is subject to the chemical ion strengthening treatment, a depth of an ion-exchanged stress layer DOC is greater than or equal to 90 µm; a surface compressive stress Cs50 is greater than or equal to 100 MPa; a surface compressive stress value Cs is greater than or equal to 260 MPa; an average tensile stress is greater than or equal to 60 MPa; and microhardness of the microcrystalline glass subject to the chemical ion strengthening treatment is greater than or equal to 780 Hv at 0.2 Kgf. A 0.7 mm thick sample of the microcrystalline glass subject to the chemical ion strengthening treatment has a four-point bending strength greater than or equal to 600 MPa under a condition of impact energy greater than or equal to 0.2 J.

With reference to the second aspect, in some possible embodiments, a glass transition temperature of the microcrystalline glass is greater than or equal to 560°C.

The glass transition temperature of the microcrystalline glass obtained through heat treatment for crystallization on the base glass is high, so that a network structure of the glass is tight, increasing strength of the microcrystalline glass, and reducing damage to the network structure of the glass during chemical strengthening.

A third aspect of embodiments of this application provides a method for preparing microcrystalline glass. The preparation method includes:
melting, forming, and annealing a mixed batch corresponding to chemical composition of base glass, to obtain the base glass, where the base glass includes the following components in molar percentages: yttrium(III) oxide (Y₂O₃): 4% to 15%; aluminum(III) oxide (Al₂O₃): 3% to 30%; silicon dioxide (SiO₂): 40% to 75%; zirconium dioxide (ZrO₂): 0.5% to 4%; lithium oxide (Li₂O): 3% to 12%; sodium oxide (Na₂O): 1.5% to 9%; phosphorus pentoxide (P₂O₅): 0.1% to 2%; and zinc oxide (ZnO): 1% to 8%; and
subjecting the base glass to heat treatment for crystallization, to obtain the microcrystalline glass.

The obtained yttrium-aluminum-silicon base glass can be subject to heat treatment for crystallization by adjusting and controlling the composition of the base glass, to obtain a main crystalline phase including at least one type of crystalline phases Y_{y}ZrₓO_{1.5y+2x}, ZrₓY_{y}O_{2x+1.5y}, and ZrO₂, with controllable crystallinity and crystal sizes, so that microcrystalline glass with both high mechanical properties and high optical properties can be prepared.

With reference to the third aspect, in some possible embodiments, the heat treatment includes first-step heat treatment and second-step heat treatment that are carried out sequentially, where a heat treatment temperature for the first-step heat treatment is 600°C to 720°C, and heat treatment duration for the first-step heat treatment is 0.5 h to 40 h; and a heat treatment temperature for the second-step heat treatment is 730°C to 850°C, and heat treatment duration for the second-step heat treatment is 0.5 h to 8 h.

Through optimization of the heat treatment process with adjustment and control of the foregoing components, the crystallinity and crystal sizes of the main crystalline phase in the microcrystalline glass can be better controlled to be as small as possible. Specifically, the crystallinity may be 5% to 90%, and an average crystal size is less than or equal to 100 nm. Therefore, a refractive index of the microcrystalline glass is reduced while high strength of the microcrystalline glass is ensured, increasing transmittance of the microcrystalline glass.

With reference to the third aspect, in some possible embodiments, after the step of obtaining the microcrystalline glass, the preparation method further includes:
subjecting the microcrystalline glass to chemical ion strengthening treatment.

The obtained microcrystalline glass can be subject to chemical strengthening treatment, thereby further improving mechanical properties of the microcrystalline glass.

With reference to the third aspect, in some possible embodiments, the chemical ion strengthening treatment includes at least one time of ion exchange, the ion exchange is carried out in a molten metal salt, and the molten metal salt includes at least one of sodium ions and potassium ions. Specifically, the chemical ion strengthening treatment includes a first time of ion exchange and a second time of ion exchange, where
a molten metal salt for the first time of ion exchange includes sodium nitrate, potassium nitrate, and lithium nitrate, an exchange temperature is 430°C to 530°C, and exchange duration is 4 h to 12 h; and
a molten metal salt for the second time of ion exchange includes sodium nitrate, potassium nitrate, and lithium nitrate, an exchange temperature is 400°C to 500°C, and exchange duration is 0.5 h to 5 h.

A depth of ion exchange can be increased by controlling the chemical strengthening process. In this case, a depth of an ion-exchanged stress layer DOC is greater than or equal to 90 µm; a surface compressive stress Cs50 is greater than or equal to 100 MPa; a surface compressive stress value Cs is greater than or equal to 260 MPa; an average tensile stress is greater than or equal to 60 MPa; and microhardness of the microcrystalline glass subject to the strengthening treatment is greater than or equal to 780 Hv at 0.2 Kgf. A 0.7 mm thick sample of the microcrystalline glass subject to the strengthening treatment has a four-point bending strength greater than or equal to 600 MPa under a condition of impact energy greater than or equal to 0.2 J.

With reference to the third aspect, in some possible embodiments, a melting temperature for the mixed batch corresponding to the chemical composition of the base glass is 1500°C to 1650°C.

The mixed batch corresponding to the chemical composition of the base glass has a low melting temperature, so that the base glass can be prepared by using a conventional melting method. For example, the mixed batch may be melted by using a high-temperature melting device such as a silicon-molybdenum furnace, an electric melting furnace, or a flame kiln. Therefore, mass production can be implemented with no special process required for preparation.

With reference to the third aspect, in some possible embodiments, the components of the base glass have at least one of the following proportion relationships:
a ratio of a molar percentage of Al₂O₃ to a molar percentage of Y₂O₃ is 0.2 to 7.5;
a sum of a molar percentage of Y₂O₃ and a molar percentage of Al₂O₃ is 7% to 45%;
a ratio of a molar percentage of Y₂O₃ to a molar percentage of Li₂O is 0.33 to 8; and
a ratio of a molar percentage of Li₂O to a molar percentage of Na₂O is 0.33 to 8.

With reference to the third aspect, in some possible embodiments, the base glass further includes 0% to 2% of titanium dioxide (TiO₂) in a molar percentage.

Further, a total molar percentage of ZrO₂, TiO₂, and P₂O₅ is 2% to 6%.

Further, a ratio of the molar percentage of Y₂O₃ to the molar percentage of ZrO₂+TiO₂+P₂O₅ is 0.5 to 25.

A fourth aspect of embodiments of this application provides a glass product. The glass product is obtained from the base glass according to the first aspect of embodiments of this application, or is obtained from the microcrystalline glass according to the second aspect of embodiments of this application, or is obtained from the microcrystalline glass prepared by using the method for preparing the microcrystalline glass according to the third aspect of embodiments of this application. Specifically, the glass product is a glass cover plate.

The microcrystalline glass obtained from the foregoing base glass of the yttrium-aluminum-silicon system has both high optical properties and high mechanical properties. The glass product may be used as, but is not limited to, a protective material, to be used in various mobile terminals or electronic products, for example, as a glass cover plate of various mobile terminals or electronic products.

A fifth aspect of embodiments of this application provides a terminal device. The terminal device includes the glass product according to the fourth aspect of embodiments of this application. Specifically, the glass product may be a glass cover plate of the terminal device. It may be understood that, in addition to the terminal device, the glass product may be further used in another product that requires surface protection.

### BRIEF DESCRIPTION OF DRAWINGS

FIG. 1 is a diagram of a structure of a terminal device according to an embodiment of this application;
FIG. 2 is a schematic flowchart of preparation of microcrystalline glass according to an embodiment of this application;
FIG. 3 is a diffractogram of crystals in microcrystalline glass pieces prepared in Embodiment 1 to Embodiment 4 and Comparative Example 1 according to this application;
FIG. 4A is a "stress-depth" curve graph of microcrystalline glass prepared in Embodiment 1 after ion exchange according to this application;
FIG. 4B is a graph of concentration distribution of Na ions of microcrystalline glass prepared in Embodiment 1 after ion exchange according to this application; and
FIG. 5A to FIG. 5D are images of crystal morphology in Embodiment 1 to Embodiment 4 respectively according to this application.

### Reference Numerals of Main Elements

| | |
|---|---|
| Device | 100 |
| Housing | 10 |
| Glass cover plate | 20 |

### DESCRIPTION OF EMBODIMENTS

The following describes embodiments of this application with reference to the accompanying drawings in embodiments of this application. Unless otherwise specified, a data range in this application should include an upper limit, a lower limit, and any range between the upper limit and the lower limit. In addition, it should be understood that, when a quantity, a concentration, or another numerical value or parameter is given in a form of a range, one or more preferred ranges, or a preferred upper limit and a preferred lower limit, all ranges formed by any combination of an upper limit or preferred value in any range and a lower limit or preferred value in any range are explicitly disclosed. It should also be understood that features disclosed in this specification and the accompanying drawings may be used in any combination.

In this application, unless otherwise specified, a content of each component of glass is expressed in a molar percentage of an oxide.

In addition, in this application, "base glass" is glass that is not strengthened, in which no crystals are formed. In this application, "microcrystalline glass" is crystalline phase-containing glass obtained by subjecting base glass to heat treatment or to heat treatment and strengthening treatment. In this application, composition of the base glass is substantially same as that of the corresponding microcrystalline glass.

At present, a lithium-aluminum-silicon microcrystalline glass system has the following problems. A content of lithium oxide is high, resulting in high costs; due to low modulus of elasticity, the glass is likely to break when subject to a specific mechanical impact; and due to low surface hardness, the glass is not resistant to scratching, and the glass is likely to crack when a sharp object impacts on the glass. However, because these problems are caused by characteristics of the lithium-aluminum-silicon microcrystalline glass system, there is very limited room for improvement.

In view of this, in this application, a new type of yttrium-aluminum-silicon glass, and prepares corresponding yttrium-aluminum-silicon microcrystalline glass is prepared through a heat treatment process. Yttrium oxide is added to aluminum-silicon glass. Yttrium ions can well fill gaps of the glass, changing density of the glass, so that high modulus of elasticity and high Vickers hardness of the glass can be achieved, thereby improving impact resistance of the glass. However, when a content of the added yttrium oxide is excessively high, there is difficulty in glass melting because a melting point of yttrium oxide is up to 2410°C, and the glass needs to be prepared by using a special process, for example, with plasma, making it difficult to implement mass production. In addition, when the content of the yttrium oxide is excessively high, a refractive index of the glass is high, severely reducing transmittance of the glass. In particular, the microcrystalline glass obtained through heat treatment has very low transmittance and poor optical properties, and consequently can be hardly used in the field of terminal cover plates. However, when the content of yttrium oxide is excessively low, a network structure of the glass is loose, and a content of crystals is also low, resulting in poor mechanical properties of the microcrystalline glass.

Therefore, through repeated tests and research, the inventor of this application optimizes and selects a specific component of the yttrium-aluminum-silicon glass system, a content of each component, and a content ratio between specific components, so that a new type of base glass of the yttrium-aluminum-silicon system is prepared. A mixed batch for the composition of the base glass can be melted at a low temperature. In addition, a crystalline phase with a specific crystal form and size can be precipitated in the base glass through an optimized heat treatment process, to form microcrystalline glass. Moreover, the obtained microcrystalline glass can be further subject to chemical ion exchange strengthening treatment, so that the microcrystalline glass of the yttrium-aluminum-silicon system that has high strength, high transparency, and low costs, and that can be produced on a large scale is formed.

The base glass provided in embodiments of this application mainly includes the following components in molar percentages: yttrium(III) oxide (Y₂O₃): 4% to 15%; aluminum(III) oxide (Al₂O₃): 3% to 30%; silicon dioxide (SiO₂): 40% to 75%; zirconium dioxide (ZrO₂): 0.5% to 4%; lithium oxide (Li₂O): 3% to 12%; sodium oxide (Na₂O): 1.5% to 9%; phosphorus pentoxide (P₂O₅): 0.1% to 2%; and zinc oxide (ZnO): 1% to 8%.

The formed base glass is subject to heat treatment for crystallization to prepare microcrystalline glass. A main crystalline phase of the microcrystalline glass includes one or a composite crystalline phase of Y_{y}ZrₓO_{1.5y+2x}, ZrₓY_{y}O_{2x+1.5y}, and ZrO₂. Further, the main crystalline phase of the microcrystalline glass may include one or a composite crystalline phase of Y_{y}ZrₓO_{1.5y+2x} and ZrₓY_{y}O_{2x+1.5y}. The main crystalline phase of the foregoing types helps increase hardness, modulus of elasticity, and fracture toughness of the microcrystalline glass, thereby improving scratching resistance and impact resistance of the microcrystalline glass. It may be understood that, in addition to the foregoing main crystalline phase, the microcrystalline glass further includes another crystalline phase in a lower content, and may specifically include one or a composite crystalline phase of ZnAl₂O₄, spodumene, and a quartz solid solution.

The crystallinity of the main crystalline phase affects hardness, modulus of elasticity, fracture toughness, and transmittance of the microcrystalline glass. As the crystallinity increases, the hardness, modulus of elasticity, and fracture toughness of the microcrystalline glass increase correspondingly, but the transmittance decreases, and consequently the microcrystalline glass can be hardly used in a mobile terminal. As the crystallinity decreases, the transmittance of the microcrystalline glass increases, but the hardness, modulus of elasticity, and fracture toughness are excessively low, and consequently the microcrystalline glass can also be hardly used in a mobile terminal. Therefore, in embodiments of this application, during heat treatment, the crystallinity of the main crystalline phase is controlled to be greater than or equal to 5% and less than or equal to 90%. Excessively low crystallinity results in poor mechanical properties of the glass, such as Young's modulus and Vickers hardness. Excessively high crystallinity is likely to cause production of a heterophase, reducing transmittance of the glass. In some embodiments, the crystallinity of the main crystalline phase is greater than or equal to 8%. In some embodiments, the crystallinity of the main crystalline phase is greater than or equal to 10%. In some embodiments, the crystallinity of the main crystalline phase is greater than or equal to 12%. In some embodiments, the crystallinity of the main crystalline phase is greater than or equal to 15%. In some embodiments, the crystallinity of the main crystalline phase is greater than or equal to 17%. In some embodiments, the crystallinity of the main crystalline phase is greater than or equal to 20%. In some embodiments, the crystallinity of the main crystalline phase is greater than or equal to 25%. In some embodiments, the crystallinity of the main crystalline phase is greater than or equal to 30%. The crystallinity of the main crystalline phase is controlled to be within the foregoing range, so that the obtained microcrystalline glass can have excellent optical properties while mechanical properties such as hardness, modulus of elasticity, and fracture toughness are improved.

The average crystal size and distribution uniformity of the main crystalline phase affect mechanical properties and optical properties of the obtained microcrystalline glass. An excessively large average crystal size leads to poor optical properties, for example, low transmittance. An excessively small average crystal size leads to reduced mechanical properties, for example, poor strength and impact resistance. Therefore, in embodiments of this application, during heat treatment, the average crystal size of the main crystalline phase is controlled to be less than or equal to 100 nm. In some embodiments, the average crystal size of the main crystalline phase is less than or equal to 95 nm. In some embodiments, the average crystal size of the main crystalline phase is less than or equal to 90 nm. In some embodiments, the average crystal size of the main crystalline phase is less than or equal to 85 nm. In some embodiments, the average crystal size of the main crystalline phase is less than or equal to 80 nm. In some embodiments, the average crystal size of the main crystalline phase is less than or equal to 75 nm. In some embodiments, the average crystal size of the main crystalline phase is less than or equal to 70 nm. In some embodiments, the average crystal size of the main crystalline phase is less than or equal to 65 nm. In some embodiments, the average crystal size of the main crystalline phase is less than or equal to 60 nm. In some embodiments, the average crystal size of the main crystalline phase is less than or equal to 55 nm. In some embodiments, the average crystal size of the main crystalline phase is less than or equal to 50 nm. The average crystal size of the main crystalline phase is controlled to be within the foregoing range, and the main crystalline phase is controlled to be distributed uniformly, so that the obtained microcrystalline glass can have excellent optical properties while mechanical properties such as hardness, modulus of elasticity, and fracture toughness are improved.

Y₂O₃, a necessary component in the base glass, can well fill gaps of the glass, and therefore can effectively increase a degree of stacking of the network structure of the base glass. In addition, a crystalline phase with at least one of Y_{y}ZrₓO_{1.5y+2x}, ZrₓY_{y}O_{2x+1.5y}, and ZrO₂ as a main component can be formed through heat treatment with Y₂O₃ as a raw material, so that hardness, modulus of elasticity, and fracture toughness of the microcrystalline glass can be increased, thereby improving scratching resistance and impact resistance of the microcrystalline glass. However, an excessively high content of yttrium oxide increases a refractive index and reduces transmittance of the microcrystalline glass. In this case, the microcrystalline glass can be hardly used in a mobile terminal. Therefore, the content of yttrium oxide needs to be controlled to be within a specific range to balance both optical properties and mechanical properties of the microcrystalline glass. Through a large quantity of experimental studies, a range of Y₂O₃ in the composition is determined: a lower limit is 5%. If the lower limit is excessively low, lower than 5%, the glass has a weak crystallization capability, and consequently desired microcrystalline glass cannot be prepared. The lower limit may be further 6%. The lower limit may be further 7%. The lower limit may be further 7.5%. An upper limit of Y₂O₃ may be 15%. If the upper limit is excessively high, higher than 15%, it is difficult to melt the components of the base glass because a melting point of Y₂O₃ is high, and the obtained microcrystalline glass has a high refractive index and low transmittance. The upper limit may be further 14%. The upper limit may be further 12.5%. The upper limit may be further 11%. The upper limit may be further 10%. It may be understood that, in embodiments of this application, the content of Y₂O₃ may be within a range between any upper limit above and any lower limit above. For example, in an embodiment of this application, the content of Y₂O₃ may be 5% to 15%, may be further 6% to 14%, may be further 6% to 12.5%, may be further 7% to 11%, or may be further 7.5% to 10%. For example, the content of Y₂O₃ may be 5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, or a value between any two of the foregoing values. Microcrystalline glass with good mechanical properties and good optical properties can be obtained by controlling the content of Y₂O₃ to be within the foregoing range. In particular, when the content of Y₂O₃ ranges from 7.5% to 10%, both optical properties and mechanical properties of the obtained microcrystalline glass are significantly improved.

Al₂O₃, a necessary component in the base glass, can participate in construction of the network structure of the glass with sufficient free oxygen, helping improve strength and chemical stability of the glass. In addition, an appropriate amount of Al₂O₃ facilitates ion exchange in microcrystalline glass. However, when a content of Al₂O₃ is excessively low, the network structure of the glass is loose, resulting in low strength and chemical stability of the glass. When the content of Al₂O₃ is excessively high, the network structure of the glass is excessively dense, and crystals can hardly be precipitated and grow, affecting formation of the microcrystalline glass. Therefore, in embodiments of this application, a lower limit of the content of Al₂O₃ is limited to 3%. The lower limit may be further 5%. The lower limit may be further 8%. The lower limit may be further 10%. An upper limit of the content of Al₂O₃ may be 20%. The upper limit may be further 18%. The upper limit may be further 15%. The upper limit may be further 14%. It may be understood that, in embodiments of this application, the content of Al₂O₃ may be within a range between any upper limit above and any lower limit above. For example, in an embodiment of this application, the content of Al₂O₃ may be 5% to 20%, may be further 5% to 18%, may be further 8% to 15%, or may be further 8% to 14%. For example, the content of Al₂O₃ may be 3%, 4%, 5%, 6%, 7%, 8%, 9%, 10%, 11%, 12%, 13%, 14%, 15%, 16%, 17%, 18%, 19%, 20%, or a value between any two of the foregoing values. Controlling the content to be within the foregoing range can help improve strength and chemical stability of the glass, and can provide more sufficient space for crystallization and crystal growth, helping control precipitation of target crystals during heat treatment. In particular, when the content of Al₂O₃ is 8% to 15%, a more stable network structure can be formed, and more sufficient space can be provided for crystallization and crystal growth.

SiO₂, a necessary component in the base glass, is mainly used to form a network structure of the glass, to improve chemical stability and thermal stability of the glass. If a content of SiO₂ is 40% or less, glass-forming performance and chemical stability of the glass deteriorate, and phase separation is likely to occur, or even the glass cannot be formed. Therefore, a lower limit of the content of SiO₂ may be 40% or more, or further 45% or more. However, when the content of SiO₂ is excessively high, melting and crystallization for microcrystalline glass can be hardly controlled. Therefore, an upper limit of the content of SiO₂ may be limited to 75% or less, or may be further 65% or less. It may be understood that, in embodiments of this application, the content of SiO₂ may be within a range between any upper limit above and any lower limit above. For example, in an embodiment of this application, the content of SiO₂ may be 40% to 75%, or may be further 45% to 65%. For example, the content of SiO₂ may be 45%, 50%, 55%, 60%, 65%, 70%, 75%, or a value between any two of the foregoing values. With the content of SiO₂ controlled to be within the foregoing range, chemical stability and thermal stability of the base glass can be improved, difficulty of heat treatment for crystallization can be reduced, and controllability of crystallization can be improved.

ZrO₂, a necessary component in the base glass, has functions mainly as follows. First, ZrO₂ is used as a nucleation agent, so that uniform crystallization can occur in the glass, which can effectively control precipitation and sizes of crystals, avoiding an impact on optical properties due to an excessively large crystal size. Second, ZrO₂ can improve chemical stability of the base glass or microcrystalline glass when a content of Li is high. During experimental research, it is found that ZrO₂ can further effectively reduce a risk of loss of transparency of the base glass during formation. To achieve effect of the foregoing microcrystalline glass, a lower limit of a content of ZrO₂ may be 0.5%, may be further 1.5%, or may be further 2.5%. However, if the content of ZrO₂ is excessively high, a melting temperature for the glass increases, making a melting process difficult. Therefore, an upper limit of the content of ZrO₂ may be 4%, or may be further 3.5%. It may be understood that, in embodiments of this application, the content of ZrO₂ may be within a range between any upper limit above and any lower limit above. For example, in an embodiment of this application, the content of ZrO₂ may be 0.5% to 4%, may be further 1.5% to 3.5%, or may be further 2% to 3.5%. For example, the content of ZrO₂ may be 0.5%, 1%, 1.5%, 2%, 2.5%, 3%, 3.5%, 4%, or a value between any two of the foregoing values.

Li₂O, a necessary component in the base glass, can reduce viscosity of the base glass to facilitate melting. Li₂O is also a main component during ion exchange for replacement with sodium ions and potassium ions, and can increase a depth of a compressive stress after chemical ion strengthening. However, if a content of Li₂O is less than 3%, melting effect for the glass is poor, and a large depth of ion exchange can be hardly obtained. Therefore, a lower limit of the content of Li₂O is 3%, or further 6%. If the content of Li₂O is excessively high, chemical stability of the glass deteriorates, and crystallization can be hardly controlled, resulting in phase separation or a change of the type of a main crystalline phase. Therefore, an upper limit of the content of Li₂O is 12%, further 11%, or further 10.5%. It may be understood that, in embodiments of this application, the content of Li₂O may be within a range between any upper limit above and any lower limit above. For example, in an embodiment of this application, the content of Li₂O may be 3% to 12%, may be further 6% to 11%, or may be further 6% to 10.5%. For example, the content of Li₂O may be 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, or a value between any two of the foregoing values.

Na₂O is a necessary component in the base glass apparently different from common microcrystalline glass with a low content of Na₂O. Na₂O, as a network modifier of the glass, mainly breaks the network and provides free oxygen, and can strongly inhibit precipitation of crystals. The low content of Na₂O in the common microcrystalline glass facilitates crystallization. However, in embodiments of this application, if the content of Na₂O is excessively low, during ion exchange, the exchange between Na ions and K ions in the microcrystalline glass is insufficient, leading to a low surface compressive stress value, consequently affecting strength. Therefore, in embodiments of this application, the content of Na₂O cannot be excessively low, and a lower limit may be 1.5%, or further 2%. If the glass contains excessive Na₂O, an expansion coefficient of the glass increases, and thermal stability is poor, causing difficulty in annealing, and increasing a risk of explosion; and precipitation of crystals can be inhibited, reducing the content of crystals, consequently reducing strength of the microcrystalline glass. Therefore, in embodiments of this application, an upper limit of the content of Na₂O may be 9%, or further 6%. It may be understood that, in embodiments of this application, the content of Na₂O may be within a range between any upper limit above and any lower limit above. For example, in an embodiment of this application, the content of Na₂O may be 1.5% to 9%, or may be further 2% to 6%. For example, the content of Na₂O may be 1.5%, 2%, 2.5%, 3%, 3.5%, 4%, 4.5%, 5%, 5.5%, 6%, 6.5%, 7%, 7.5%, 8%, 8.5%, 9%, or a value between any two of the foregoing values.

P₂O₅ is a necessary component in the base glass. The introduction of P₂O₅ can increase an amount of introduced zirconium oxide, and the network of the glass becomes loose due to π-bonding. Therefore, a small amount of P₂O₅ can reduce a melting temperature for the glass and increase ion exchange efficiency. However, a high content of P₂O₅ causes phase separation of the glass, affecting optical properties, and even resulting in loss of transparency. Therefore, the content of P₂O₅ is 0.1% to 2%, or further 0.3% to 1%. For example, the content of P₂O₅ may be 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a value between any two of the foregoing values.

ZnO is a necessary component in the base glass. The introduction of ZnO helps improve melting, nucleation, and crystallization of the glass. However, an excessively large amount of introduced ZnO is likely to cause phase separation of the glass. Therefore, in embodiments of this application, a content of ZnO is 1% to 8%, or further 3% to 5%. For example, the content of ZnO may be 1%, 1.5%, 2%, 2.5%, 3%, 3.5%, 4%, 4.5%, 5%, 5.5%, 6%, 6.5%, 7%, 7.5%, 8%, or a value between any two of the foregoing values.

MgO is an optional component in the base glass. The introduction of MgO helps improve melting and formation of the glass. However, an excessively large amount of introduced MgO is likely to cause phase separation of the glass and is not conducive to ion exchange. Therefore, in embodiments of this application, a content of MgO is 0% to 2%, or further 0.5% to 1.5%. For example, the content of MgO may be 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a value between any two of the foregoing values.

TiO₂, an optional component in the base glass, is introduced as a nucleation agent, so that a nucleation rate for microcrystalline glass can be increased. However, the microcrystalline glass can be colored with an excessively large amount of introduced TiO₂. Therefore, in embodiments of this application, a content of TiO₂ is 0% to 2%, or further 0.5% to 1.5%. For example, the content of TiO₂ may be 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a value between any two of the foregoing values.

CeO₂ and Sb₂O₃ are introduced as a composite clarifying agent. Therefore, in embodiments of this application, contents of CeO₂ and Sb₂O₃ may be each 0.1% to 0.5%, or further 0.2% to 0.3%. For example, the contents of CeO₂ and Sb₂O₃ may be each 0.1%, 0.2%, 0.3%, 0.4%, 0.5%, or a value between any two of the foregoing values.

In addition, to prepare transparent yttrium-aluminum-silicon glass and avoid phase separation or loss of transparency of the glass, through controllable crystallization, a crystalline phase of a desired type can be formed, and sizes and distribution of crystals can be adjusted and controlled, and excellent ion exchange effect can be achieved, thereby obtaining microcrystalline glass with high strength, high transparency, and low costs. Embodiments of this application further limit at least one of the following proportion relationships (1) to (6) of the components.
(1) A ratio of a molar percentage of Al₂O₃ to a molar percentage of Y₂O₃ may be 0.2 to 7.5, or further 0.7 to 3. For example, the ratio may be 0.2, 0.5, 0.7, 1, 1.5, 2, 2.5, 3, 3.5, 4, 4.5, 5, 5.5, 6, 6.5, 7, 7.5, or a value between any two of the foregoing values.
(2) A sum of a molar percentage of Y₂O₃ and a molar percentage of Al₂O₃ may be 7% to 45%, or further 10% to 40%. For example, the sum of the molar percentages may be 7%, 10%, 15%, 18%, 20%, 25%, 30%, 35%, 40%, 45%, or a value between any two of the foregoing values.
(3) A ratio of a molar percentage of Y₂O₃ to a molar percentage of Li₂O may be 0.33 to 8, or further 0.33 to 5. For example, the ratio may be 0.33, 0.35, 0.38, 0.4, 0.45, 0.5, 0.55, 0.6, 1, 1.5, 2, 2.5, 3, 3.5, 4, 4.5, 5, 5.5, 6, 6.5, 7, 7.5, 8, or a value between any two of the foregoing values.
(4) A ratio of a molar percentage of Li₂O to a molar percentage of Na₂O may be 0.33 to 8, or further 1 to 5. For example, the ratio may be 0.33, 0.38, 0.4, 0.45, 0.5, 0.55, 0.6, 1, 1.5, 2, 2.5, 3, 3.5, 4, 4.5, 5, 5.5, 6, 6.5, 7, 7.5, 8, or a value between any two of the foregoing values.
(5) When TiO₂ is added to the composition, a total molar percentage of ZrO₂, TiO₂, and P₂O₅ that are used as a composite nucleation agent may be 2% to 6%, or further 2% to 5%. For example, the total molar percentage of the composite nucleation agent may be 2%, 2.5%, 3%, 3.5%, 4%, 4.5%, 5%, 5.5%, 6%, 6.5%, 7%, or a value between any two of the foregoing values.
(6) When TiO₂ is added to the composition, a ratio of a molar percentage of Y₂O₃ to a total molar percentage of ZrO₂+TiO₂+P₂O₅ may be 0.5 to 25, or further 1.5 to 14. For example, the ratio may be 0.5, 1, 1.5, 2, 2.5, 3, 3.5, 4, 5, 6, 7, 8, 9, 10, 11, 12, 13, 14, 15, 16, 17, 18, 19, 20, 21, 22, 23, 24, 25, or a value between any two of the foregoing values.

Specifically, Young's modulus of the microcrystalline glass obtained through heat treatment for crystallization on the base glass of the yttrium-aluminum-silicon system may be 100 GPa or more. Microhardness of the microcrystalline glass without chemical strengthening treatment may be 700 Hv or more at 0.2 Kgf, or may be further 750 Hv or more. The microcrystalline glass may be further subject to chemical strengthening treatment. After the chemical strengthening treatment, a depth of an ion-exchanged stress layer DOC is greater than or equal to 90 µm (0.6 t), or further 110 µm or more. Microhardness of the strengthened microcrystalline glass may be 780 Hv or more at 0.2 Kgf, or may be further 820 Hv or more. In addition, transmittance of the microcrystalline glass may be 88% (550 nm) or more, or may be further 90% or more; and haze of the microcrystalline glass is less than or equal to 0.5%, or further less than or equal to 0.2%. A 0.7 mm thick sample of the microcrystalline glass subject to the strengthening treatment has a four-point bending strength greater than or equal to 600 MPa under a condition of impact energy greater than or equal to 0.2 J. A glass transition temperature of the microcrystalline glass is greater than or equal to 560°C.

Therefore, the microcrystalline glass obtained from the base glass of the yttrium-aluminum-silicon system has both high optical properties and high mechanical properties, and may be used as, but is not limited to, a protective material, to be used in various mobile terminals or electronic products, for example, as a glass cover plate of various mobile terminals or electronic products. Mobile terminal products include but are not limited to mobile phones, tablet computers, desktop computers, notebook computers, smart screens, displays, speakers, glasses, watches, headphones, on-board products, and other electronic terminal devices related to mobile office, smart home, sports health, audio and video entertainment, and smart travel. It may be understood that, in addition to the terminal device, the glass product may be further used in another product that requires surface protection.

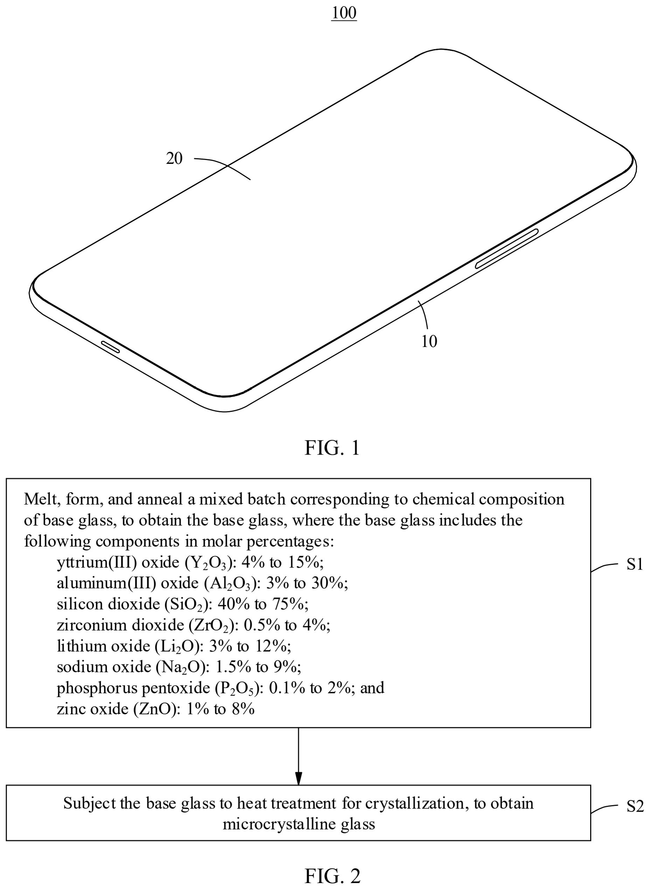

In some embodiments, as shown in FIG. 1, the terminal device 100 may be a mobile phone, and the terminal device 10 includes a middle frame 10 and a glass cover plate 20 connected to the middle frame 10.

It may be understood that, in addition to the terminal device, the glass product may be further used in another product that requires surface protection.

It may be further understood that the base glass may be further directly subject to chemical strengthening treatment based on different application scenarios, to obtain strengthened glass.

Based on a same inventive concept, as shown in FIG. 2, an embodiment of this application further provides a method for preparing the foregoing microcrystalline glass, including the following steps.

Step S1: Melt, form, and anneal a mixed batch corresponding to chemical composition of base glass, to obtain the base glass. For the components of the base glass, refer to the foregoing description. Details are not described herein again.

Specifically, chemical materials or mineral materials corresponding to the components of the base glass may be melted by using a high-temperature melting device such as a silicon-molybdenum furnace, an electric melting furnace, or a flame kiln, stirred by using a platinum stirring paddle, then formed through a conventional process such as casting, calendering, floating, or downdrawing, and then subject to isothermal annealing, to obtain glass of an yttrium-aluminum-silicon system.

The composition of the base glass in embodiments of this application has a low melting temperature, approximately 1500°C to 1650°C, so that the base glass can be prepared by using a conventional melting method, with no special process required for preparation, and therefore mass production can be implemented.

Margins of six sides of the annealed glass are cut off to obtain glass of an appropriate size. Then, the glass is subject to precision cutting, flat lapping, and edging by using a wire cutting machine, a CNC engraving machine, and a flat lapping and polishing machine to obtain base glass of a specific size. A thickness of the base glass may be 0.1 mm to 1.5 mm.

Step S2: Subject the obtained base glass to heat treatment for crystallization, to obtain the microcrystalline glass.

Because the glass undergoes nucleation and growth simultaneously during one-step heat treatment, there are crystal agglomeration, unstable formed crystals, and co-growth of polycrystalline phases that exist in the glass. In this case, small crystals grow smaller and large crystals grow larger, making crystal sizes large and non-uniform, resulting in unsatisfactory effect of subsequent de-crystallization and ion exchange.

Therefore, in embodiments of this application, two-step heat treatment is provided specifically as follows.

First-step heat treatment: First, the base glass is subject to heat treatment at a nucleation temperature of 600°C to 720°C for 0.5 h to 40 h, to slowly and fully form crystal nuclei, which is referred to as a nucleation process.

In some embodiments, the nucleation temperature may be further 650°C to 720°C. For example, the nucleation temperature may be 600°C, 610°C, 620°C, 630°C, 640°C, 650°C, 660°C, 670°C, 680°C, 690°C, 700°C, 710°C, 720°C, or a value between any two of the foregoing values.

In some embodiments, the nucleation duration may be further 5 h to 30 h or 10 h to 20 h. For example, the nucleation duration may be 0.5 h, 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 22 h, 25 h, 28 h, 30 h, 35 h, 40 h, or a value between any two of the foregoing values.

Second-step heat treatment: Then, the nucleated glass plate is subject to heat treatment at a crystallization temperature of 730°C to 850°C for 0.5 h to 8 h to precipitate crystals and enable the crystals to further grow, which is referred to as a crystallization process. In this way, microcrystalline glass with uniform crystal sizes, contours without apparent edges and corners, and an average crystal size of 5 nm to 100 nm is obtained.

In some embodiments, the crystallization temperature may be further 750°C to 780°C. For example, the nucleation temperature may be 730°C, 740°C, 750°C, 760°C, 770°C, 780°C, 790°C, 800°C, 810°C, 820°C, 830°C, 840°C, 850°C, or a value between any two of the foregoing values.

In some embodiments, the crystallization duration may be further 0.5 h to 6 h or 1 h to 4 h. For example, the nucleation duration may be 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h, 8 h, or a value between any two of the foregoing values.

During heat treatment, when a nucleation temperature is excessively high or a crystallization temperature is excessively low, it is difficult to form crystals with specific and uniformly distributed sizes; or when a nucleation temperature is excessively low or a crystallization temperature is excessively high, the temperature for normal crystallization of the base glass is excessively high, and the crystals are likely to grow excessively large, reducing transmittance. Therefore, the foregoing ranges of the crystallization temperature and the nucleation temperature help control the sizes and distribution of crystals. In addition, the duration of heat treatment for nucleation is long, so that the nucleation can be more sufficient, and the uniformity of crystal distribution can be improved; and the duration of heat treatment for crystallization is short, so that the crystal size can be controlled not to be excessively large. Therefore, the microcrystalline glass with both high mechanical properties and high optical properties can be obtained through the foregoing heat treatment process.

Through optimization of the heat treatment process with adjustment and control of the foregoing components, the crystallinity and crystal sizes of the main crystalline phase in the microcrystalline glass can be better controlled to be as small as possible. Specifically, the crystallinity may be 5% to 90%, and an average crystal size is less than or equal to 100 nm. Therefore, a refractive index of the microcrystalline glass is reduced while high strength of the microcrystalline glass is ensured, increasing transmittance of the microcrystalline glass.

Step S3: Subject the microcrystalline glass to chemical strengthening treatment.

The chemical strengthening treatment includes at least one time of ion exchange, and the ion exchange is carried out in a molten metal salt, where the molten metal salt may include at least one of sodium ions, potassium ions, lithium ions, and other metal salts.

Specifically, in embodiments of this application, the chemical strengthening treatment includes two times of ion exchange.

A molten metal salt for the first time of ion exchange includes sodium nitrate, potassium nitrate, lithium nitrate, and the like, an exchange temperature is 430°C to 530°C, and exchange duration is 4 h to 12 h.

In some embodiments, the exchange temperature may be further 450°C to 500°C, or may be further 450°C to 480°C. For example, the exchange temperature may be 430°C, 440°C, 450°C, 460°C, 470°C, 480°C, 490°C, 500°C, 510°C, 520°C, 530°C, or a value between any two of the foregoing values.

In some embodiments, the exchange duration may be further 5 h to 10 h. For example, the exchange duration may be 4 h, 5 h, 6 h, 7 h, 8 h, 9 h, 10 h, 11 h, 12 h, or a value between any two of the foregoing values.

A molten metal salt for the second time of ion exchange includes sodium nitrate, potassium nitrate, lithium nitrate, and the like, exchange duration is 400°C to 500°C, and exchange duration is 0.5 h to 5 h.

In some embodiments, the exchange temperature may be further 430°C to 480°C, or may be further 450°C to 480°C. For example, the exchange temperature may be 400°C, 410°C, 420°C, 430°C, 440°C, 450°C, 460°C, 470°C, 480°C, 490°C, 500°C, or a value between any two of the foregoing values.

In some embodiments, the exchange duration may be further 1 h to 4 h. For example, the exchange duration may be 0.5 h, 1 h, 1.5 h, 2 h, 2.5 h, 3 h, 3.5 h, 4 h, 4.5 h, 5 h, or a value between any two of the foregoing values.

During strengthening treatment, the first time of ion exchange is mainly for increasing a depth of a stress after glass strengthening; and the second time of ion exchange is mainly for increasing a surface stress. The glass stress can be maximized by controlling the strengthening treatment process, improving impact resistance and dropping resistance of the glass.

The following further describes embodiments of this application by using specific embodiments. In different embodiments, the composition of base glass, as well as conditions of the preparation process and strengthening process of microcrystalline glass are different. Specific composition and process conditions of base glass are shown in Table 1, and corresponding characteristic parameters are shown in Table 2.

**Table 1**

| Oxide (mol%) | Embodiment 1 | Embodiment 2 | Embodiment 3 | Embodiment 4 | Comparative Example 1 |
|---|---|---|---|---|---|
| Y₂O₃ | 6.7 | 6.3 | 6.5 | 12.5 | 3.6 |
| Al₂O₃ | 18.9 | 18.6 | 4.9 | 27.1 | 16.9 |
| SiO₂ | 54.9 | 54.8 | 71.5 | 46.4 | 67.5 |
| ZnO | 5.3 | 5.2 | - | - | |
| ZrO₂ | 2.4 | 2.3 | 2.4 | 3.2 | 2.6 |
| Na₂O | 2.3 | 2.2 | 2.4 | 1.4 | 8.7 |
| Li₂O | 9.6 | 9.5 | 11.9 | 8.9 | 0.2 |
| TiO₂ | - | 0.5 | - | | |
| P₂O₅ | - | 0.5 | - | | |
| Sb₂O₃ | - | 0.3 | 0.12 | 0.3 | 0.3 |
| CeO₂ | - | - | 0.21 | 0.2 | 0.2 |
| Al₂O₃/Y₂O₃ | 2.82 | 2.95 | 0.76 | 2.17 | 4.69 |
| Melting schedule | 1580°C/24 h | 1590°C/24 h | 1550°C/24 h | 1650°C/24 h | 1600°C/24 h |
| Annealing schedule | 650°C/5 h | 650°C/5 h | 600°C/5 h | 660°C/5 h | 650°C/5 h |
| Nucleation schedule | 680°C/10 h | 670°C/10 h | 650°C/10 h | 700°C/10 h | 680°C/10 h |
| Crystallization schedule | 780°C/2 h | 760°C/2 h | 750°C/2 h | 820°C/2 h | 750°C/2 h |
| Main crystalline phase of microcrystalline glass | | Y₄Zr₃O₁₂ | Y₄Zr₃O₁₂ | Zr_{0.72}Y_{0.28}O_{1.862} | Zr_{0.9}Y_{0.1}O_{1.95} |
| | Y₄Zr₃O₁₂ | | | Li(AlSi₂O₆) | Y₂Si₂O₇ |
| | Li(AlSi₂O₆) | | | Y₂Si₂O₇ | Y₄Zr₃O₁₂ |
| | | | | | ZnAl₂O₄ |

**Table 2**

| Property characteristics | Embodiment 1 | Embodiment 2 | Embodiment 3 | Embodiment 4 | Comparative Example 1 |
|---|---|---|---|---|---|
| Modulus of elasticity (GPa) | 111 | 115 | 114 | 136 | 88 |
| Microhardness at 0.2 Kgf before ion exchange (MPa) | 720 | 730 | 720 | 760 | 650 |
| Transmittance for visible light (550 nm/%) | 90.5 | 91 | 91.5 | 88 | 81.5 |
| Haze % | 0.15 | 0.1 | 0.07 | 0.2 | 0.3 |
| Depth of ion exchange (µm) | 135 | 126 | 156 | 95 | 63 |
| Cs50 after ion exchange (MPa) | 245 | 236 | 289 | 187 | 76 |
| Surface compressive stress value Cs (MPa) | 410 | 348 | 460 | 300 | 246 |
| Average tensile stress Ct-Av (MPa) | 122 | 145 | 163 | 84 | 38 |
| Microhardness at 0.2 Kgf after ion exchange (MPa) | 830 | 830 | 840 | 870 | 760 |
| Ball dropping impact (J) | 0.30 | 0.35 | 0.35 | 0.35 | 0.15 |

Note: In Embodiment 1 to Embodiment 4, two-step chemical strengthening is carried out, where first-step strengthening is carried out in a salt bath of NaNO₃ (95%) + KNO₃ (5%) at 490°C for 8 h, and second-step strengthening is carried out in a salt bath of KNO₃ (100%) at 450°C for 1 h for exchange. A thickness of each microcrystalline glass is 0.65 mm.

Methods for testing the foregoing properties are as follows.

Modulus of elasticity: measured by using a modulus of elasticity tester with reference to GB/T 7962.6-2010.

Microhardness: measured by using a Vickers hardness tester with reference to GB/T 37900-2019.

Transmittance for visible light: measured by using a spectrophotometer with reference to GB/T 2410-2008.

Haze: measured by using a Konica Minolta CM3600A colorimeter with reference to GB/T 2410-2008.

Cs50 after ion exchange: measured by using an Orihara SLP-series instrument.

Depth of ion exchange: measured by using an Orihara SLP-series instrument.

Surface compressive stress value: measured by using an Orihara SLP-series instrument.

Average tensile stress Ct-Av: measured by using an Orihara SLP-series instrument.

Ball dropping impact: The glass is subject to an impact test by using a steel ball with a diameter of ¢ 20 mm and a weight of 32.65 g in a free-fall manner. A ball dropping height h corresponding to glass breakage is recorded and converted into corresponding impact energy through the energy calculation formula J = Mgh, where M is a mass of the steel ball, g = 9.8 m/s², and h is a glass failure height.

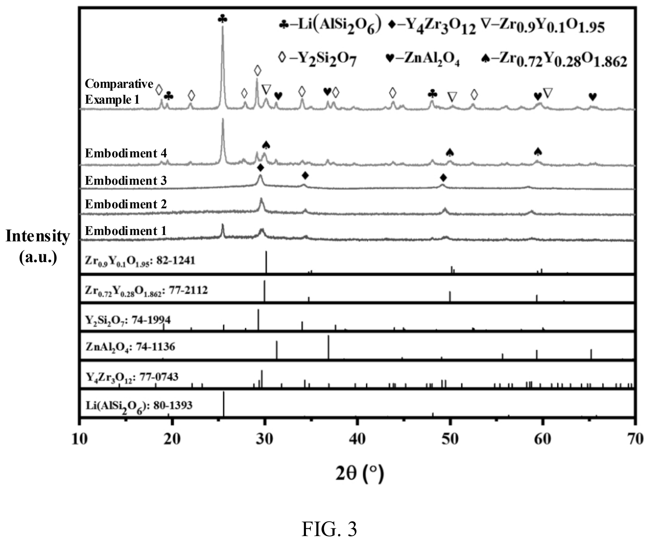

In addition, FIG. 3 is a diffractogram of crystals in the microcrystalline glass pieces prepared in Embodiment 1 to Embodiment 4 and Comparative Example 1. It can be seen from the figure that a main crystalline phase in the microcrystalline glass pieces in Embodiment 2 and Embodiment 3 is the Y₄Zr₃O₁₂ crystalline phase, a main crystalline phase in the microcrystalline glass in Embodiment 1 includes the Y₄Zr₃O₁₂ crystalline phase and the Li(AlSi₂O₆) crystalline phase, and a main crystalline phase in the microcrystalline glass in Embodiment 4 is a composite crystalline phase of three crystalline phases: Zr_{0.72}Y_{0.28}O_{1.862}, Li(AlSi₂O₆), and Y₂Si₂O₇. A main crystalline phase in the microcrystalline glass in Comparative Example 1 is a composite crystalline phase of Zr_{0.9}Y_{0.1}O_{1.95}, Y₂Si₂O₇, Y₄Zr₃O₁₂, and ZnAl₂O₄. It indicates that when the composition is not appropriately designed, crystals such as Li(AlSi₂O₆) and Y₂Si₂O₇ are likely to be precipitated in the microcrystalline glass, reducing transmittance and increasing haze.

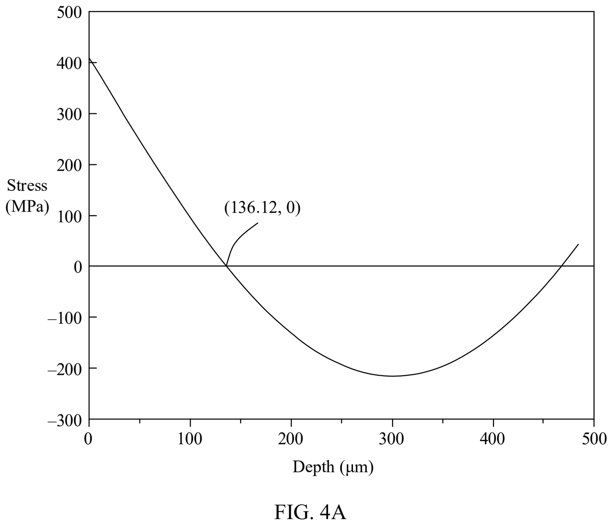

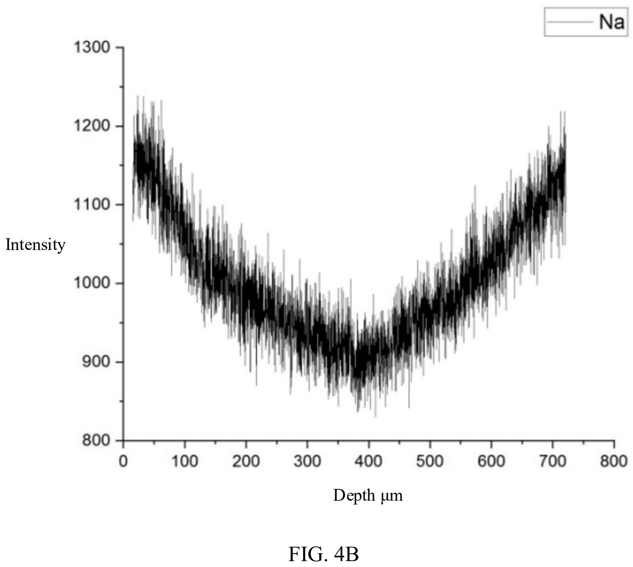

FIG. 4A and FIG. 4B are graphs of concentration distribution of Na ions of the microcrystalline glass in Embodiment 1 after ion exchange. It can be learned from FIG. 4A that Na⁺ ions are enriched in a surface layer of the chemically strengthened glass, and the concentration of Na⁺ ions decreases as the depth increases. It can be learned from FIG. 4B that, after chemical strengthening, a depth of ion exchange can reach 136 µm, a compressive stress value is high, and a tensile stress is appropriate.

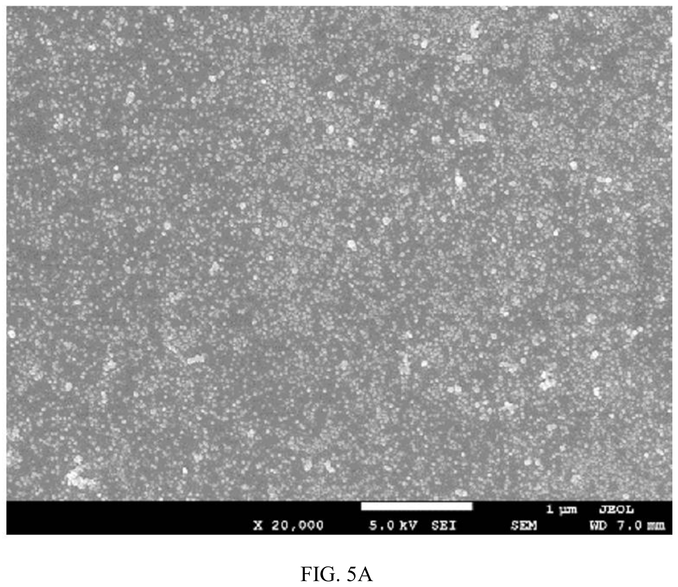

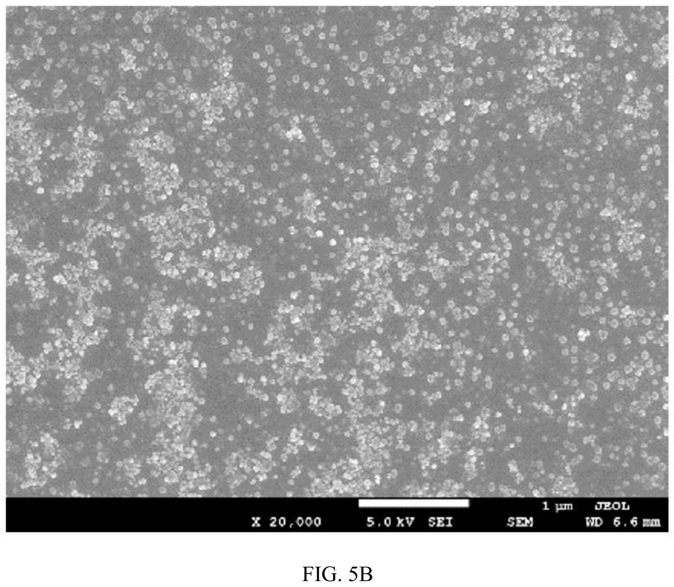

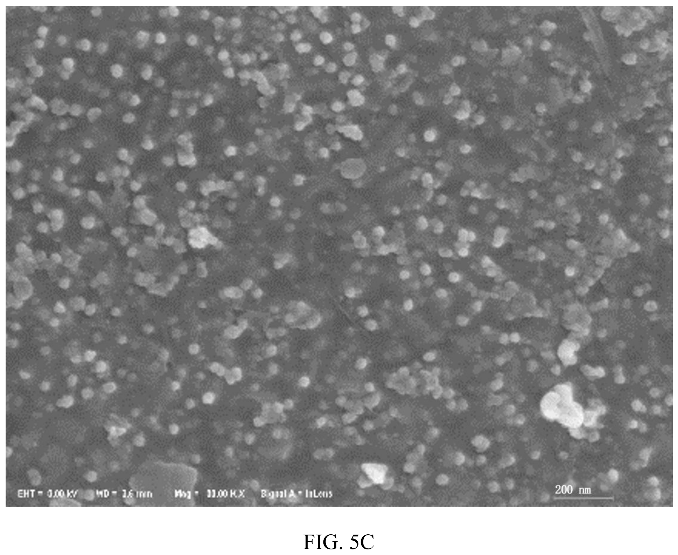

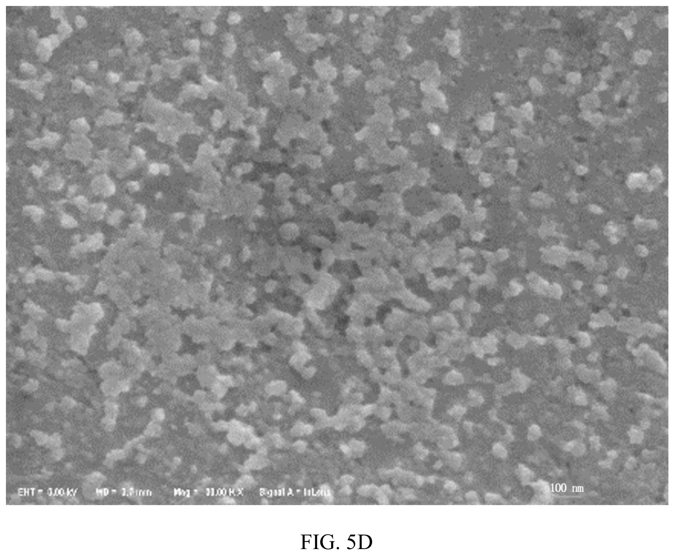

FIG. 5A to FIG. 5D are images of crystal morphology in the microcrystalline glass pieces in Embodiment 1 to Embodiment 4 respectively. It can be seen from the figures that the microcrystalline glass pieces in Embodiment 1 to Embodiment 4 have uniformly distributed crystals of uniform sizes, and a formed crystal is a nanocrystal whose size is 100 nm or less, helping increase transmittance of the microcrystalline glass.

It needs to be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. In the case of no conflict, the implementations of this application and the features in the implementations may be mutually combined. Therefore, the protection scope of this application shall be subject to the protection scope of the claims.

## Claims

1. Base glass, wherein the base glass comprises the following components in molar percentages:
yttrium(III) oxide (Y₂O₃): 4% to 15%;
aluminum(III) oxide (Al₂O₃): 3% to 30%;
silicon dioxide (SiO₂): 40% to 75%;
zirconium dioxide (ZrO₂): 0.5% to 4%;
lithium oxide (Li₂O): 3% to 12%;
sodium oxide (Na₂O): 1.5% to 9%;
phosphorus pentoxide (P₂O₅): 0.1% to 2%; and
zinc oxide (ZnO): 1% to 8%, wherein
the base glass is capable of being subject to heat treatment for crystallization, and/or chemical ion strengthening treatment.

2. The base glass according to claim 1, wherein the components of the base glass have at least one of the following proportion relationships:
a ratio of a molar percentage of Al₂O₃ to a molar percentage of Y₂O₃ is 0.2 to 7.5;
a sum of a molar percentage of Y₂O₃ and a molar percentage of Al₂O₃ is 7% to 45%;
a ratio of a molar percentage of Y₂O₃ to a molar percentage of Li₂O is 0.33 to 8; and
a ratio of a molar percentage of Li₂O to a molar percentage of Na₂O is 0.33 to 8.

3. The base glass according to claim 1 or 2, wherein the base glass further comprises 0% to 2% of titanium dioxide (TiO₂) in a molar percentage.

4. The base glass according to claim 3, wherein a total molar percentage of ZrO₂, TiO₂, and P₂O₅ is 2% to 6%.

5. The base glass according to claim 3 or 4, wherein a ratio of the molar percentage of Y₂O₃ to the total molar percentage of ZrO₂+TiO₂+P₂O₅ is 0.5 to 25.

6. The base glass according to any one of claims 1 to 5, wherein the base glass further comprises the following components in molar percentages:
magnesium oxide (MgO): 0% to 2%;
cerium oxide (CeO₂): 0.1% to 0.5%; and
antimony(III) oxide (Sb₂O₃): 0.1% to 0.5%.

7. Microcrystalline glass, wherein the microcrystalline glass is obtained through heat treatment for crystallization on the base glass according to any one of claims 1 to 6, and a main crystalline phase of the microcrystalline glass comprises one or a composite crystalline phase of Y_{y}ZrₓO_{1.5y+2x}, ZrₓY_{y}O_{2x+1.5y}, and ZrO₂.

8. The microcrystalline glass according to claim 7, wherein the main crystalline phase of the microcrystalline glass comprises one or a composite crystalline phase of Y_{y}ZrₓO_{1.5y+2x} and ZrₓY_{y}O_{2x+1.5y}.

9. The microcrystalline glass according to claim 7 or 8, wherein a crystalline phase of the microcrystalline glass further comprises one or a composite crystalline phase of ZnAl₂O₄, spodumene, and a quartz solid solution.

10. The microcrystalline glass according to any one of claims 7 to 9, wherein crystallinity of the main crystalline phase is 5% to 90%, and an average crystal size of the main crystalline phase is less than or equal to 100 nm.

11. The microcrystalline glass according to any one of claims 7 to 10, wherein Young's modulus of the microcrystalline glass is greater than or equal to 90 GPa; and
microhardness of the microcrystalline glass is greater than or equal to 700 Hv at 0.2 Kgf.

12. The microcrystalline glass according to any one of claims 7 to 11, wherein transmittance of the microcrystalline glass at 550 nm in a visible light region is greater than or equal to 88%.

13. The microcrystalline glass according to any one of claims 7 to 12, wherein the microcrystalline glass is capable of being subject to chemical ion strengthening treatment.

14. The microcrystalline glass according to claim 13, wherein after the microcrystalline glass is subject to the chemical ion strengthening treatment, a depth of an ion-exchanged stress layer DOC is greater than or equal to 90 µm;
a surface compressive stress Cs50 is greater than or equal to 100 MPa;
a surface compressive stress value Cs is greater than or equal to 260 MPa;
an average tensile stress is greater than or equal to 60 MPa; and
microhardness of the microcrystalline glass subject to the chemical ion strengthening treatment is greater than or equal to 780 Hv at 0.2 Kgf.

15. The microcrystalline glass according to claim 13 or 14, wherein a 0.7 mm thick sample of the microcrystalline glass subject to the chemical ion strengthening treatment has a four-point bending strength greater than or equal to 600 MPa under a condition of impact energy greater than or equal to 0.2 J.

16. The microcrystalline glass according to any one of claims 7 to 15, wherein a glass transition temperature of the microcrystalline glass is greater than or equal to 560°C.

17. A method for preparing microcrystalline glass, comprising:
melting, forming, and annealing a mixed batch corresponding to chemical composition of base glass, to obtain the base glass, wherein the base glass comprises the following components in molar percentages:
yttrium(III) oxide (Y₂O₃): 4% to 15%;
aluminum(III) oxide (Al₂O₃): 3% to 30%;
silicon dioxide (SiO₂): 40% to 75%;
zirconium dioxide (ZrO₂): 0.5% to 4%;
lithium oxide (Li₂O): 3% to 12%;
sodium oxide (Na₂O): 1.5% to 9%;
phosphorus pentoxide (P₂O₅): 0.1% to 2%; and
zinc oxide (ZnO): 1% to 8%; and
subjecting the base glass to heat treatment for crystallization, to obtain the microcrystalline glass.

18. The method for preparing the microcrystalline glass according to claim 17, wherein the heat treatment comprises first-step heat treatment and second-step heat treatment that are carried out sequentially, wherein
a heat treatment temperature for the first-step heat treatment is 600°C to 720°C, and heat treatment duration for the first-step heat treatment is 0.5 h to 40 h; and
a heat treatment temperature for the second-step heat treatment is 730°C to 850°C, and heat treatment duration for the second-step heat treatment is 0.5 h to 8 h.

19. The method for preparing the microcrystalline glass according to claim 17 or 18, wherein after the step of obtaining the microcrystalline glass, the preparation method further comprises:
subjecting the microcrystalline glass to chemical ion strengthening treatment.

20. The method for preparing the microcrystalline glass according to claim 19, wherein the chemical ion strengthening treatment comprises at least one time of ion exchange, the ion exchange is carried out in a molten metal salt, and the molten metal salt comprises at least one of sodium ions, potassium ions, and lithium ions.

21. The method for preparing the microcrystalline glass according to claim 20, wherein the chemical ion strengthening treatment comprises a first time of ion exchange and a second time of ion exchange, wherein
a molten metal salt for the first time of ion exchange comprises sodium nitrate, potassium nitrate, and lithium nitrate, an exchange temperature is 430°C to 530°C, and exchange duration is 4 h to 12 h; and
a molten metal salt for the second time of ion exchange comprises sodium nitrate, potassium nitrate, and lithium nitrate, an exchange temperature is 400°C to 500°C, and exchange duration is 0.5 h to 5 h.

22. The method for preparing the microcrystalline glass according to any one of claims 17 to 21, wherein a melting temperature for the mixed batch corresponding to the chemical composition of the base glass is 1500°C to 1650°C.

23. The method for preparing the microcrystalline glass according to any one of claims 17 to 22, wherein a main crystalline phase of the microcrystalline glass comprises one or a composite crystalline phase of Y_{y}ZrₓO_{1.5y+2x}, ZrₓY_{y}O_{2x+1.5y}, and ZrO₂.

24. The method for preparing the microcrystalline glass according to claim 23, wherein the main crystalline phase of the microcrystalline glass comprises one or a composite crystalline phase of Y_{y}ZrₓO_{1.5y+2x} and ZrₓY_{y}O_{2x+1.5y}.

25. The method for preparing the microcrystalline glass according to any one of claims 17 to 24, wherein the components of the base glass have at least one of the following proportion relationships:
a ratio of a molar percentage of Al₂O₃ to a molar percentage of Y₂O₃ is 0.2 to 7.5;
a sum of a molar percentage of Y₂O₃ and a molar percentage of Al₂O₃ is 7% to 45%;
a ratio of a molar percentage of Y₂O₃ to a molar percentage of Li₂O is 0.33 to 8; and
a ratio of a molar percentage of Li₂O to a molar percentage of Na₂O is 0.33 to 8.

26. The method for preparing the microcrystalline glass according to any one of claims 17 to 25, wherein the base glass further comprises 0% to 2% of titanium dioxide (TiO₂) in a molar percentage.

27. The method for preparing the microcrystalline glass according to claim 26, wherein a total molar percentage of ZrO₂, TiO₂, and P₂O₅ is 2% to 6%.

28. The method for preparing the microcrystalline glass according to claim 26 or 27, wherein a ratio of the molar percentage of Y₂O₃ to the molar percentage of ZrO₂+TiO₂+P₂O₅ is 0.5 to 25.

29. A glass product, wherein the glass product is obtained from the base glass according to any one of claims 1 to 7, or is obtained from the microcrystalline glass according to any one of claims 8 to 16, or is obtained from the microcrystalline glass prepared by using the method for preparing the microcrystalline glass according to any one of claims 17 to 28.

30. The glass product according to claim 29, wherein the glass product is a glass cover plate.

31. A terminal device, comprising the glass product according to claim 29 or 30.
